# EUROPEAN PATENT APPLICATION

(11) **EP 2 447 921 A1**
(43) Date of publication of application: **02.05.2012**
(21) Application number: 11180959.6
(22) Date of filing: 12.09.2011
(51) Int. Cl.: G07G 1/00

(54) **Point of sale terminal**

(30) Priority: 27.10.2010 US 913426
(71) Applicant: NCR Corporation, Duluth, GA 30096 (US)
(72) Inventor: Roquemore, John, Lawrenceville, GA 30045 (US)
(74) Representative: MacLeod, Roderick William

(57) **Abstract**

An apparatus, system and method are presented for a point of sale terminal (100) including a scanner (110). A display device (115), a printer device (135) and a magnetic strip reader device (130) are connected to the scanner (110). A processor (210) in the scanner executes software that causes the processor (210) to operate the scanner (110), the attached devices (115,120,130,135) and provide the features and functions of the point of sale terminal (100).

## Description

The present invention relates generally to point of sale terminals. More particularly, but not exclusively, the invention relates to an apparatus, method and system that reduces the cost of implementing a point of sale (POS) terminal.

POS terminals are commonly used throughout the retail industry to process purchase transactions. A POS terminal typically includes a personal computer (PC) core and chassis, one or more displays, a scanner and weigh scale, a cash drawer, a magnetic stripe reader (MSR) and a printer. There is a significant amount of processing power and expense associated with both the PC and scanner. However, the available processing power exceeds and in some cases far exceeds the processing requirements of the POS terminal.

Therefore, what is needed is a POS terminal that reduces the amount of unused processing power which also lowers the cost of the POS terminal.

Among its several aspects, the present invention recognizes a condition wherein a POS terminal has at least two separate components, each having a processing element with significant unused processing power. This condition poses a problem because it increases the cost of a POS terminal. The invention addresses this problem, as well as others, by recognizing that both the PC core and scanner elements of a POS terminal have significant unused processing power and that the scanner has sufficient processing power to operate the scanner as well as provide the functions performed by the PC core.

The invention eliminates the PC core from the POS terminal and moves the functions performed by the PC core to the scanner. This includes moving all the physical connections to peripherals from the PC core to the scanner. The overall cost of the POS terminal is reduced because the PC core is eliminated.

The invention also addresses different processing needs that exist between software that controls the scanner and software that performs point of sale functions. Software that controls the scanner requires a real-time processing environment that allows the software to quickly receive and process scanner data before it is lost. Conversely, the POS software only requires a general purpose processing environment. The invention provides two solutions to this issue. One solution involves using a small real-time executive program that time-slices the scanner's processor between the scanner software and the POS software giving priority to the scanner software. A second solution involves using a multi-core scanner processor and assigning the scanner software to one core of the processor and the POS software to a different core of the processor. Both solutions allow current software to execute side by side with little or no modification thus reducing the cost of eliminating the PC core.

According to a first aspect of the invention there is provided a point of sale terminal comprising: a scanner device including a processor where the processor executes instructions that cause it to identify items presented to the scanner for purchase; a display device in communication with the processor; a printer device in communication with the processor; a magnetic stripe reader device in communication with the processor; wherein the processor further executes instructions that cause the processor to control the operations of the devices in communication with the processor and the features of the point of sale terminal including a purchase transaction.

The terminal may further include a cash drawer device in communication with the processor.

The terminal may further include a cash dispenser device in communication with the processor.

The terminal may further include a network controller in communication with the processor.

The scanner device may comprise a laser scanner, an image scanner, or the like.

The processor may identify items presented to the scanner for purchase by reading an optical code on the items.

The processor may further execute instructions that cause the processor to receive payment information from the magnetic stripe reader.

The processor may further execute instructions that cause the processor to display item information on the display device.

The processor may further execute instructions that cause the processor to print item information on the printer device.

The scanner device may include a weigh scale and the processor may further execute instructions that cause the processor to operate the weigh scale.

According to a second aspect of the invention there is provided a method implemented by a processor in an optical code scanner where the scanner is one device in a point of sale terminal, the method comprising: receiving unprocessed data captured by the scanner for an item presented to the scanner for identification as part of a purchase transaction on the point of sale terminal; identifying the item by decoding information about an optical code contained in the unprocessed data where the optical code is affixed to the item; communicating with a server computer to obtain additional information about the identified item; and displaying at least part of the additional information obtained about the identified item on a display where the display is controlled by the processor.

The method may further include repeating the steps of receiving unprocessed data, identifying the item, communicating with a server computer and displaying at least part of the additional information until all items in the purchase transaction are processed.

The method may further comprise displaying a total price for the purchase transaction on the display.

The method may further comprise: receiving from a keyboard an amount tendered; and opening a cash drawer.

The method may further comprise: receiving payment information from a magnetic stripe reader and pin pad device; sending the payment information to the server computer for payment processing; receiving from the server computer confirmation that the payment processing was successful; and printing information about the purchase transaction on a printer.

The scanner may be a laser scanner, an image scanner, or the like.

Receiving unprocessed data captured by the scanner may include receiving unprocessed data from a photodiode in the scanner that captured reflected laser light.

Receiving unprocessed data captured by the scanner may include receiving unprocessed data from an image capture device in the scanner where the device is adapted to capture an image of an optical code.

The scanner may include both a laser scanner and an image scanner.

According to a third aspect of the invention there is provided a point of sale terminal system, the system comprising: a network; a server computer adapted to communicate over the network; a point of sale terminal adapted to communicate with the server computer over the network, the point of sale terminal comprising: a scanner device including a processor where the processor executes instructions that cause it to identify items presented to the scanner for purchase; a display device in communication with the processor; a printer device in communication with the processor; a magnetic stripe reader device in communication with the processor; and where the processor further executes instructions that cause the processor to control the operations of the devices in communication with the processor and the features of the point of sale terminal including a purchase transaction.

A more complete understanding of the present invention, as well as further features and advantages of the invention, will be apparent from the following specific description, given by way of example, with reference to the accompanying drawings, in which:

Fig. 1 is a high-level block diagram illustrating an exemplar embodiment of a point of sale terminal;

Fig. 2 is a high-level block diagram illustrating an exemplar embodiment of a scanner/scale combination; and

Fig. 3 is a high-level flow chart depicting an exemplary method for processing items in a purchase transaction.

In the following description, numerous details are set forth to provide an understanding of the claimed invention. However, it will be understood by those skilled in the art that the claimed invention may be practiced without these details and that numerous variations or modifications from the described embodiments are possible. Throughout this specification, like element numbers are used to describe the same parts throughout the various drawing figures referred to.

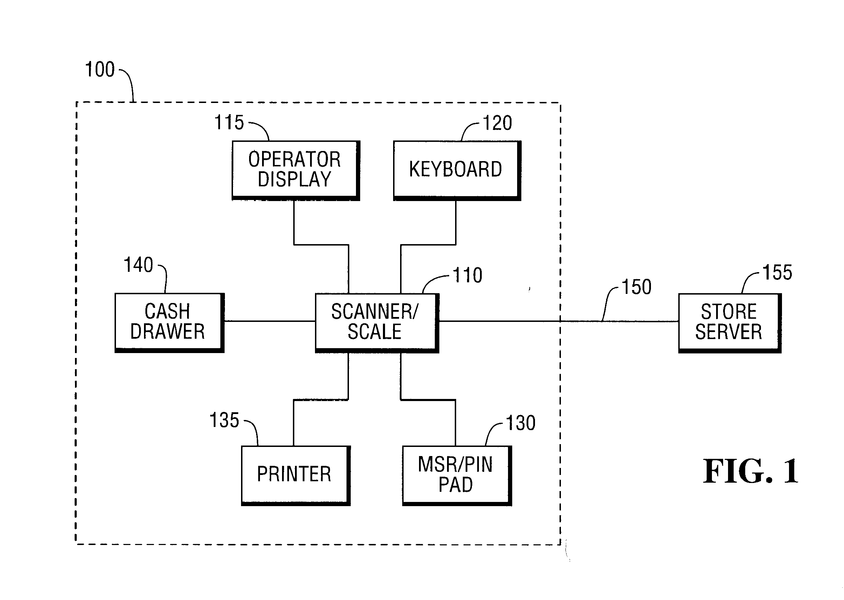

Referring to Fig. 1, there is provided a high-level diagram, in block form, illustrating an exemplar embodiment of a point of sale (POS) terminal 100. The POS terminal 100 processes items that are presented to the terminal 100 for purchase by a customer. As each item is presented to the terminal 100, the terminal 100 identifies the items and determines a price. In some cases, the terminal 100 determines a weight for the item and uses the weight to determine the price for the item. The terminal 100 maintains information on all items presented and a total for all items. The terminal 100 also processes a payment for the items once all items have been presented and a total price is determined. A purchase transaction begins when the first item of an order is presented to the terminal 100 and ends once payment for the items has been completed.

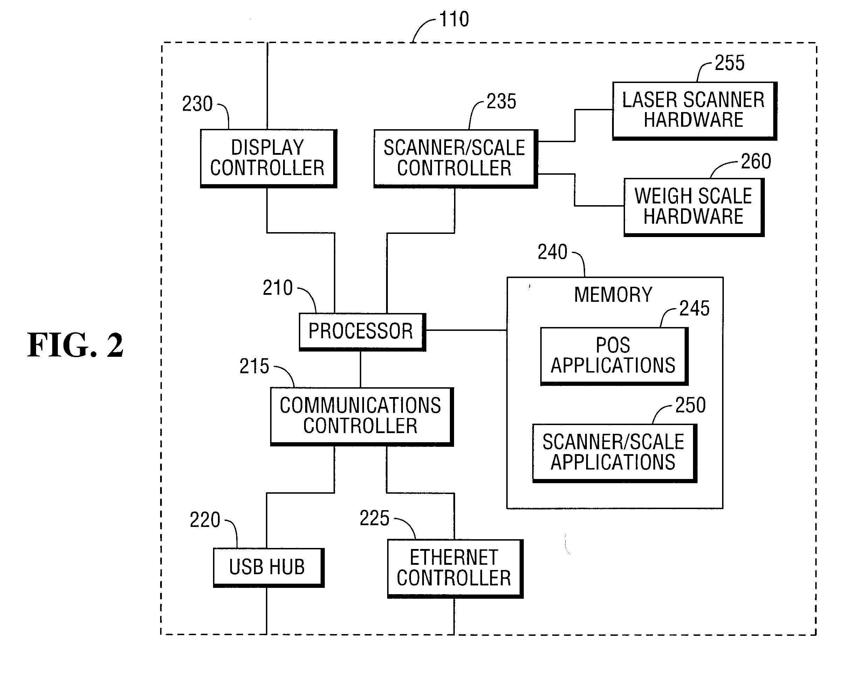

In the present embodiment, the POS terminal 100 includes a scanner and scale combination (scanner/scale) 110 and a number of peripherals attached to the scanner/scale 110, as described below. The scanner/scale 110 includes a processor (Fig. 2, element 210) that controls the operation of the scanner/scale 110 and the peripherals attached to the scanner/scale 110.

The POS terminal 100 has a number of peripheral devices attached to the scanner/scale 110. These include an operator display 115, a keyboard 120, a cash drawer 140, a printer 135 and magnetic stripe reader (MSR) 130. In addition, the scanner/scale 110 communicates with a store server 155 over a network 150.

In some embodiments, the cash drawer 140 is replaced with a currency dispenser. The currency dispenser automatically dispenses the proper amount of currency and is controlled by the processor 210. These embodiments are typically self-server embodiments where is it not desirable to give a customer access to a cash drawer. Some embodiments will have both the cash drawer 140 and the currency dispenser and software will determine whether to use the cash drawer 140 or the currency dispenser based the type of transaction (self-service or assisted service).

The operator display 115 is used to display information to a person operating the terminal 100. The person can be either a customer or an employee trained to operate the terminal 100. The operator display 115 is an LCD display but any comparable display technology can be used. The operator display 115 is connected to the scanner/scale 110 and controlled by the processor 210 in the scanner/scale 110. The processor 210 uses a communications interface, designed for use with a computer display, to communicate with the operator display 115.

The keyboard 120, cash drawer 140, printer 135 and magnetic stripe reader (MSR) 130 are all connected to the scanner/scale 110 and controlled by the processor 210 in the scanner/scale 110. The processor 210 uses a USB interface to communicate with each device. The USB interface provides a fast and low cost method of communications but other interface methods are possible and contemplated.

The MSR 130 reads magnetic stripe information generally affixed to a card such as a customer's loyalty card, credit/debit card or a driver's license. A pin pad may be included with the MSR 130 to enter a pin number or a pin pad can be created virtually on the operator display 115.

Turning now to Fig. 2, there is provided a high-level block diagram illustrating an exemplar embodiment of a scanner/scale 110 combination. The scanner/scale 110 includes a processor 210, a communications controller 215, a display controller 230, a scanner/scale controller 235 and computer memory 240.

The memory 240 is digital computer memory used to store programs and data. The processor 210 communicates with the memory 240 to read program instructions and create or modify data. When software stored in the memory 240 is updated, the processor 210 also writes program instructions to the memory 240. The memory 240 may comprise both volatile and non-volatile memory.

The program instructions are executed by the processor 240 and cause the processor 240 to control the operations of the terminal 100. Some of the program instructions are organized into applications that control or generate a specific operation or function of the terminal 100. These applications are further subdivided into POS applications 245 and scanner/scale applications 250. The POS applications 245 are responsible for controlling the operations and features of the POS terminal including those related to a purchase transaction. The Scanner/scale applications 250 are responsible for controlling the operations and features of the scanner/scale device 110.

The scanner/scale 110 in this embodiment includes a laser based scanner that scans for optical codes, such as a bar code, affixed to items presented to the terminal 100 for purchase. In some cases, the bar codes are printed on the items. The scanner/scale applications 250 cause the processor 210 to control laser scanner hardware 255 by using the scanner/scale controller 235. The scanner/scale applications 250 receive raw data from the laser scanner hardware 255 and determine if a bar code is present. The raw data includes data from a photodiode that receives reflected laser light. If a bar code is determined to be present, the bar code is decoded to recover product identification information. The product identification information is then passed to POS applications 245 to be processed as part of a purchase transaction.

In some embodiments, the scanner/scale 110 includes an image based scanner that scans for optical codes affixed to items presented to the terminal 100 for purchase. An image based scanner captures a photo, using an image capture device, of an area being scanned for an optical code. The captured image is processed by the processor 210 to determine if an optical code is present and if an optical code is found, it is decoded to recover product identification information. In some embodiments, the scanner/scale 110 includes both a laser and image based scanner.

The scanner/scale 110, in this embodiment, includes a weigh scale. The scanner/scale applications 250 also cause the processor 210 to control weigh scale hardware 260 by using the scanner/scale controller 235. Among other functions, the scanner/scale applications 250 will receive weight information from the weigh scale hardware 260 for an item placed on the weigh scale. The weight information is then passed to POS applications 245 to be processed as part of a purchase transaction.

The POS applications 245 use the communications controller 215 to control a USB hub 220 and an Ethernet Controller 225. The Ethernet controller 225 is used to communication with the store server 155 which acts as a gateway to other computers or terminals. The USB hub 220 is used to control and communication with the devices attached to the scanner/scale 110.

The store server 155 provides price lookup information to the terminal 100 for each identified item. The terminal 100 identifies an item by using the laser scanner hardware 255 to scan and capture information about an optical code attached to item. The processor 210 processes the captured information and decodes product identification information encoded in the optical code. The product identification information is sent by the processor 210 to the store server 155. The store server 155 retrieves additional information related to the product identification information. The additional information includes a unit price and a product description. In some embodiments, the additional information includes one or more of the following: promotional data, health warnings, calorie data and an expanded product description. The store server 155 sends the additional data back to the processor 210. In this embodiment, the optical code is a bar code.

In some cases, the optical code is not present on an item or is unreadable by the scanner. For these cases, the processor 210 displays a request on the operator display 115 for a user to enter product identification information for the item on the keyboard 120. The processor 210 receives the product identification information from the keyboard 120 and performs the same price lookup function described above.

In some embodiments, the store server 155 maintains a complete copy of all software used on the terminal 100. New versions of the software can also be stored on the store server 155. When new software becomes available, the store server 155, after receiving the new software, will send the new software to the terminal 100 where it is stored and executed by the processor 210 to control and operate the terminal 100.

The processor 210 in the scanner/scale 110 is used to execute both the POS applications 245 and the scanner/scale applications 250. These applications 245, 250 place different requirements on the processor 210. The scanner/scale applications 250 must be able to process raw data from the laser scanner hardware 255 and the weigh scale hardware 260 in real-time. The raw laser data is perishable and delays in processing the data will increase the error rate for reading bar codes. The POS applications 245 have less real-time requirements but have more high-level code to execute.

In some embodiments, the processor 210 an XScale processor. The XScale processor is designed for use in applications that have a high requirement for real-time processing. The XScale processor as has an embedded display controller and an Ethernet stack. In this embodiment, the display controller 230 and the Ethernet Controller 225 are contained on the XScale processor. The scanner/scale applications 250 require a real-time operating system (OS) such as RTXc. However, the POS applications 245 use a general-purpose operating system such as Linux or Windows CE. To allow these different applications and OSs to co-exist, a simple real-time executive is used. The executive allows both the RTXc and the Linux OSs to run on the XScale processor by giving each OS a slice of the processors time. Because the scanner/scale applications 250 running under RTXc require real-time processing, the executive gives the RTXc priority scheduling over the Linux OS. This provides the real-time response needed by the scanner/scale applications 250. However, the executive still guarantees that the Linux OS will receive sufficient processor time to complete its operations. The Linux OS will also have access to the display controller and Ethernet stack embedded in the XScale processor.

In other embodiments, the processor 210 is a multi-core processor such as the Intel (trade mark) Core i7 (trade mark) processor. In these embodiments, the RTXc and the Linux operating systems are executed by different cores of the same processor. A simple executive controls the resources of the processor and assures proper scheduling of tasks.

In both the XScale and multi-core embodiments, the two operating systems (RTXc and Linux) are executed side by side with little or no knowledge that the other exists on the same processor. This reduces the need to modify the operating systems and the application code. (Windows CE or another general purpose OS can be used in place of Linux.)

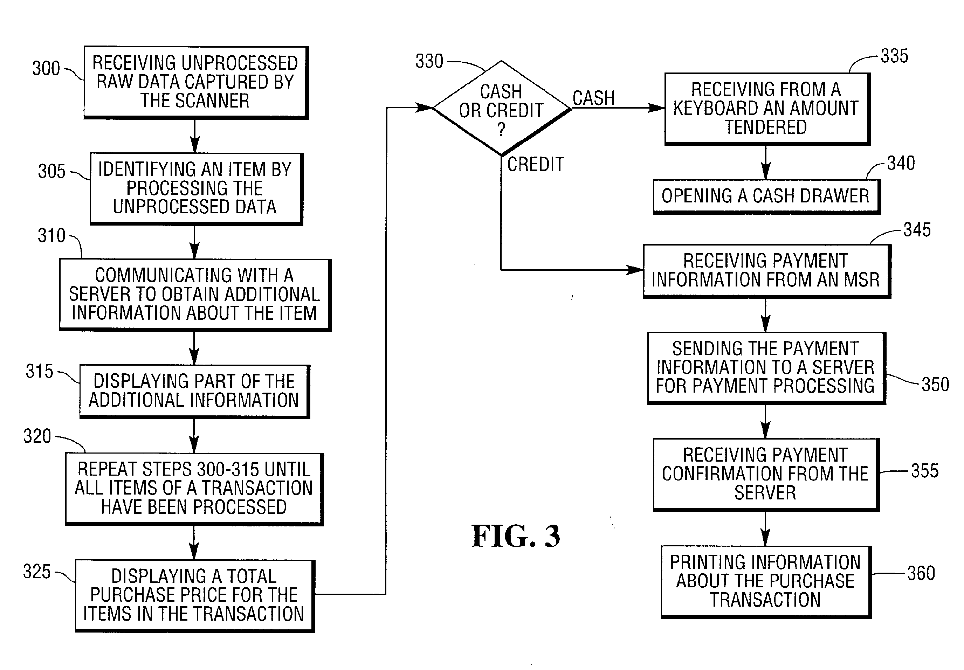

Turning now to Fig. 3, there is provided a high-level flow chart depicting a method for processing items in a purchase transaction. The transaction includes one or more items that are presented to the terminal 100 for identification and purchase. The transaction starts when the first item is presented to the terminal 100 and ends when payment for all of the items in the transaction has been received and a receipt has been printed.

In step 300, the processor 210 receives unprocessed raw data captured by the laser scanner 255 for an item presented to the scanner 110 for identification. The item is part of a purchase transaction being conducted on the terminal 100. The term unprocessed raw data means a processor has not performed any operations on the data to transform the data or search for specific information within the data. Movement of the data is not considered processing the data. The raw data is generated by a photodiode that produces a digital value proportional to the amount of reflected laser light that strikes the photodiode. As a laser beams moves across an optical code, the intensity of reflected laser light will change as the laser light reflects off a black area and a white area of the optical code. The photodiode will detect the changes in intensity. In some embodiments, the scanner 255 uses an image capture device to capture an image of an optical code which is then processed by the processor 210.

In step 305, the processor 210 identifies the item by processing the unprocessed raw data to decode product information encoded in an optical code that is affixed or printed on the item.

In step 310, the processor 210 communicates with a server computer 155 to obtain additional information about the identified item. The server 155 maintains a price for each item sold. The processor 210 sends the server 155 the product information which the sever 155 used to lookup a price for the product along with a description for the product. This additional product information is then returned to the processor 210 over the network 150.

In step 315, the processor 210 displays at least part of the additional product information on the operator display 115. Typically, the price and product description are displayed. In some embodiments, additional information, such as promotional data, will only be displayed when requested.

In step 320, steps 300 through 315 are repeated for each item in the transaction as the items are presented for purchase.

In step 325, once all items have been processed, the processor 210 displays a total price for the item or items being purchased.

In step 330, the processor 210 receives a signal that indicates whether a cash or credit payment will be made. For this method, a credit payment means either a credit or a debit payment. If the payment is by cash, control passes to step 335 and if the payment is by credit, control passes to step 345.

In step 335, the processor 210 receives an input from the keyboard 120 that represents the amount of cash that has been tendered.

In step 340, the processor 210 opens a cash drawer 140 to receive the tendered money and allow the operator to remove the proper change to return to the customer. In embodiments that use a self-service terminal, the processor 210 causes a currency dispenser to dispense the proper change to the customer and a currency receptor to receive and count the payment from the customer.

In step 345, the processor 210 receives payment information from a magnetic stripe reader 130. A user will swipe a credit or debit card using the MSR 130 and may also enter a pin number on the MSR 130.

In step 350, the processor 210 sends the received payment information to a server computer 155 for payment processing. The server computer 155 will connect to a remote computer that processes the payment information and returns a status that indicates whether the payment was successful. The server computer 155 then returns the payment status information to the processor 210.

In step 355, the processor 210 receives from the server 155 confirmation that the payment has been made.

In step 360, the processor 210 prints information about the purchase transaction on a receipt. Once the receipt has been printed, the transaction is complete.

Although particular reference has been made to a POS terminal and examples have been provided illustrating the invention, certain other embodiments, variations and modifications are also envisioned within the scope of the following claims.

## Claims

1. A point of sale terminal (100) comprising:
a scanner device (110) including a processor (210) where the processor (210) executes instructions that cause it to identify items presented to the scanner (110) for purchase;
a display device (115) in communication with the processor (210);
a printer device (135) in communication with the processor (210);
a magnetic stripe reader device (130) in communication with the processor (210);
wherein the processor (210) further executes instructions that cause the processor (210) to control the operations of the devices (115,130,135) in communication with the processor (210) and the features of the point of sale terminal (210) including a purchase transaction.

2. The terminal of claim 1, further including a cash drawer device (140) in communication with the processor (210).

3. The terminal of claim 1 or 2, where the processor (210) identifies items presented to the scanner (110) for purchase by reading an optical code on the items.

4. The terminal of any preceding claim, where the processor (210) further executes instructions that cause the processor (210) to receive payment information from the magnetic stripe reader (130).

5. The terminal of any preceding claim, where the processor (210) further executes instructions that cause the processor (210) to display item information on the display device (115).

6. The terminal of any preceding claim, where the scanner device (110) includes a weigh scale and the where the processor (210) further executes instructions that cause the processor to operate the weigh scale (110).

7. A method implemented by a processor in an optical code scanner where the scanner is one device in a point of sale terminal, the method comprising:
receiving unprocessed data captured by the scanner for an item presented to the scanner for identification as part of a purchase transaction on the point of sale terminal;
identifying the item by decoding information about an optical code contained in the unprocessed data where the optical code is affixed to the item;
communicating with a server computer to obtain additional information about the identified item; and
displaying at least part of the additional information obtained about the identified item on a display where the display is controlled by the processor.

8. The method of claim 7, further including:
repeating the steps of receiving unprocessed data, identifying the item,
communicating with a server computer and displaying at least part of the additional information until all items in the purchase transaction are processed.

9. The method of claim 7 or 8, further comprising:
receiving from a keyboard an amount tendered; and
opening a cash drawer.

10. The method of any of claims 7 to 9, further comprising:
receiving payment information from an magnetic stripe reader and pin pad device;
sending the payment information to the server computer for payment processing;
receiving from the server computer confirmation that the payment processing was successful; and
printing information about the purchase transaction on a printer.

11. The method of any of claims 7 to 10, where receiving unprocessed data captured by the scanner includes receiving unprocessed data from a photodiode in the scanner that captured reflected laser light.

12. The method of any of claims 7 to 11, where receiving unprocessed data captured by the scanner includes receiving unprocessed data from an image capture device in the scanner where the device is adapted to capture an image of an optical code.

13. The method of any of claims 7 to 12, where the scanner includes both a laser scanner and an image scanner.

14. A point of sale terminal system, the system comprising:
a network;
a server computer adapted to communicate over the network;
a point of sale terminal adapted to communicate with the server computer over the network, the point of sale terminal comprising:
a scanner device including a processor where the processor executes instructions that cause it to identify items presented to the scanner for purchase;
a display device in communication with the processor;
a printer device in communication with the processor;
a magnetic stripe reader device in communication with the processor; wherein
the processor further executes instructions that cause the processor to control the operations of the devices in communication with the processor and the features of the point of sale terminal including a purchase transaction.
